# EUROPÄISCHE PATENTSCHRIFT

(11) **EP 1 636 475 B1**
(45) Veröffentlichungstag und Bekanntmachung des Hinweises auf die Patenterteilung: **27.04.2011**
(21) Anmeldenummer: 04738627.1
(22) Anmeldetag: 09.06.2004
(51) Int. Cl.: F02F 3/22

(54) **KOLBEN FÜR EINEN VERBRENNUNGSMOTOR**
PISTON FOR AN INTERNAL COMBUSTION ENGINE
PISTON DE MOTEUR A COMBUSTION INTERNE

(30) Priorität: 12.06.2003 DE 10326456
(43) Veröffentlichungstag der Anmeldung: 22.03.2006
(73) Patentinhaber: MAHLE GMBH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2004/001173
(87) Internationale Veröffentlichungsnummer: WO 2004/111421

(56) Entgegenhaltungen:
- WO-A-00/77379
- WO-A-01/73275
- DE-A- 3 338 419
- DE-A- 4 039 751
- DE-C- 3 511 852
- US-A1- 2001 025 568

## Beschreibung

Die Erfindung betrifft einen Kolben für einen Verbrennungsmotor gemäß Patentanspruch 1.

Aus der Offenlegungsschrift DE 33 38 419 ist ein mehrteiliger Kolben für eine Hubkolbenbrennkraftmaschine bekannt, der einen Kolbenboden aufweist, in dessen Randbereich ein ringförmiger Kühlkanal angeordnet ist. Die radial äußere Begrenzung des Kühlkanals wird hierbei von einer am Randbereich des Kolbenbodens angeformten und als Träger der Kolbenringe dienenden Ringwand gebildet. Zur Seite der Bolzennaben hin wird der Kühlkanal von einer als Stützelement ausgebildeten, ringförmigen Kühlkanalabdeckung verschlossen, deren Innenrand von einer Ringmutter gehalten wird, die auf einen ringförmigen und am Kolbenboden angeformten Ansatz geschraubt ist, und deren Außenrand die Ringwand über deren bolzennabenseitige Stirnfläche abstützt, um zu verhindern, dass sich der Randbereich des Kolbenbodens während des Arbeitstaktes des Kolbens verformt.

Nachteilig ist hierbei, dass im Rahmen der sehr aufwendigen Montage des bekannten Kolbens die Kühlkanalabdeckung zunächst auf die dem Kolbenboden abgewandte Unterseite des Kolbenoberteiles geschoben werden muss, bevor die Ringmutter auf den Ansatz geschraubt und damit die Kühlkanalabdeckung festgeschraubt werden kann. Erst dann kann die weitere Montage des Kolbens erfolgen, bei der der Kolbenschaft auf die Unterseite des Kolbenoberteiles geschoben und mittels einer Kolbenbolzenbüchse daran befestigt wird.
*Das Dokument* WO 00/77379 *zeigt einen einteiligen Kolben mit einem Kühlkanal.*

Hiervon ausgehend liegt der Erfindung die Aufgabe zugrunde, einen einteiligen Kolben mit einem Kühlkanal zu schaffen, der schnell und einfach mit einer Abdeckung verschließbar ist, mit der die Steifigkeit des Kolbens verbessert wird.

Gemäß Patentanspruch 1 wird die Aufgabe dadurch gelöst, dass an den Kolbenboden über Nabenabstützungen Bolzennaben angeformt sind, deren Stirnflächen gegenüber dem radial äußeren Rand des Kolbenbodens zurückgesetzt angeordnet sind, dass die Bolzennaben durch Schaftelemente verbunden sind, die über Schaftanbindungen an den Kolbenboden angeformt sind, die im Bereich zwischen den Schaftelementen und dem Kolbenboden konkave Ausnehmungen aufweisen, und dass die Kühlkanalabdeckung aus mindestens zwei teilkreisförmigen Abdeckelementen besteht, deren Innenrand in einer teilweise in die Nabenabstützung und teilweise in die Schaftanbindungen eingearbeiteten Ausnehmung lagert, und deren Außenrand die Ringwand über deren bolzennabenseitige Stirnfläche abstützt.

Zweckmäßige Ausgestaltungen der Erfindung sind Gegenstand der Unteransprüche.

Ein Ausführungsbeispiel der Erfindung wird im Folgenden anhand der Zeichnungen beschrieben. Es zeigen
- Fig. 1: einen Kolben für einen Verbrennungsmotor mit einer Kühlkanalabdeckung gemäß der Erfindung dargestellt in einem aus zwei Hälften bestehenden Schnittbild, das zwei um 90° versetzte Längsschnitte des Kolbens zeigt,
- Fig. 2: eine vergrößerte Darstellung des Kühlkanals und der Kühlkanalabdeckung nach deren Endmontage,
- Fig. 3: eine aus zwei halbkreisförmigen Hälften bestehende Kühlkanalabdeckung und
- Fig. 4: ein vergrößertes Schnittbild des Kühlkanals mit einer im Rahmen des Zusammenbaus des Kolbens sich ergebenden Anordnung der Kühlkanal- abdeckung.

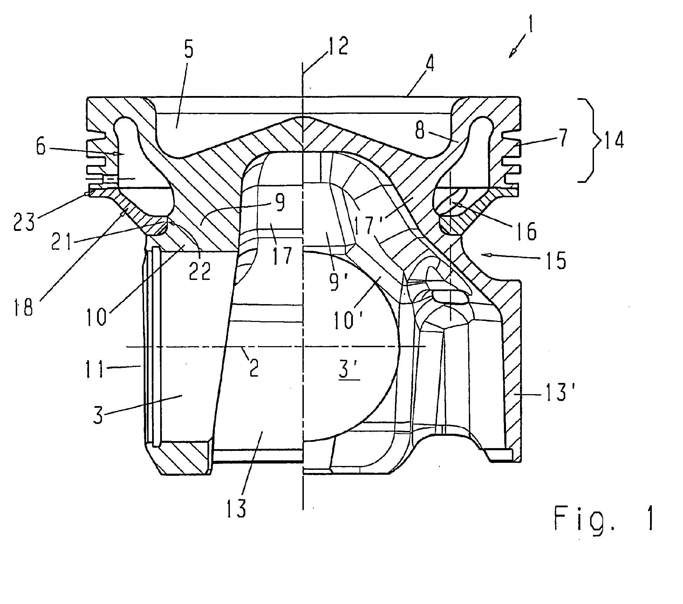

Fig. 1 zeigt einen einteilig ausgebildeten Kolben 1 für einen Verbrennungsmotor in einem Schnittbild, das aus zwei Hälften besteht, von denen die linke Hälfte einen Schnitt des Kolbens 1 entlang einer Längsachse 2 einer Nabenbohrung 3 und die rechte Hälfte einen um 90° dazu versetzten Längsschnitt des Kolbens 1 darstellt. Der Kolben 1 ist aus Stahl hergestellt und weist im Bereich des Kolbenbodens 4 eine Brennraummulde 5 auf. Im radial außen liegenden Bereich des Kolbenbodens 4 ist ein ringförmiger Kühlkanal 6 angeordnet, dessen radial äußere Begrenzung von einer an den Kolbenboden 4 angeformten Ringwand 7 und dessen radial innere Begrenzung teils von einer Ringrippe 8, teils von einer Nabenabstützung 9, 9' und teils von einer Schaftanbindung 17, 17' gebildet werden. Die Ringwand 7 dient hierbei als Kolbenringträger.

Über die Nabenabstützungen 9, 9' sind an den Kolbenboden 4 je eine Bolzennabe 10, 10' mit jeweils einer Nabenbohrung 3, 3' angeformt. Die Stirnflächen 11 der Bolzennaben 10, 10' sind gegenüber der Ringwand 7 in Richtung der Kolbenlängsachse 12 zurückgesetzt angeordnet. Die Bolzennaben 10, 10' sind über Schaftelemente 13, 13' miteinander verbunden, die über je eine Schaftanbindung 17, 17' mit dem Kolbenboden 4 verbunden sind. Zwischen den Schaftelementen 13, 13' und dem kolbenbodenseitigen Bereich 14 des Kolbens 1 weist dieser Ausnehmungen 15 auf.

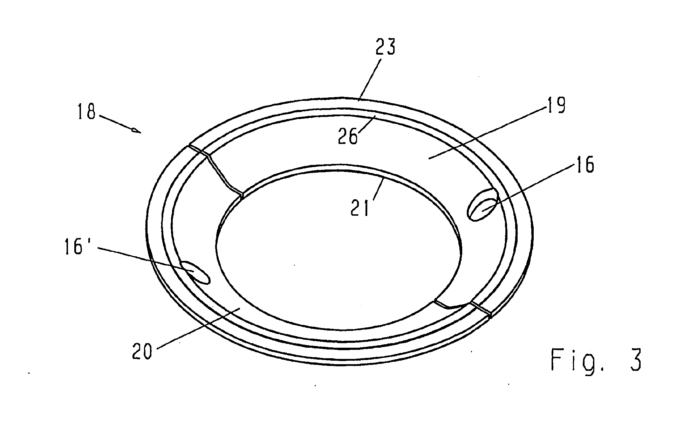

In Richtung der Bolzennaben 10, 10' ist der Kühlkanal 6 von einer Kühlkanalabdeckung 18 verschlossen, die als massives Stützelement ausgebildet ist und im vorliegenden Ausführungsbeispiel aus zwei halbkreisförmigen Abdeckungselementen 19 und 20 besteht, wie in Fig. 3 dargestellt ist. Die Kühlkanalabdeckung 18, die zum Zulauf von Kühlöl eine Öffnung 16 (siehe Fig. 1 und und zu dessem Ablauf eine nur in Fig. 3 dargestellte Öffnung 16' aufweist, ist konisch ähnlich dem Rand eines Tellers ausgebildet und stützt sich mit ihrem Innenrand 21 in einer umlaufenden Ausnehmung 22 ab, die teils in die Nabenabstützungen 9, 9' und teils in die Schaftanbindungen 17, 17' eingeformt ist. Der Außenrand 23 der Kühlkanalabdeckung 18 bildet für die kolbenbolzenseitige Stirnfläche der Ringwand 7 eine Auflage, sodass die Kühlkanalabdeckung 18 in ihrer Eigenschaft als Stützelement insb. während des Arbeitstaktes des Kolbens 1 lastbedingte Verformungen des Außenrandes des Kolbenbodens 4 und der Ringwand 7 weitgehend verhindert.

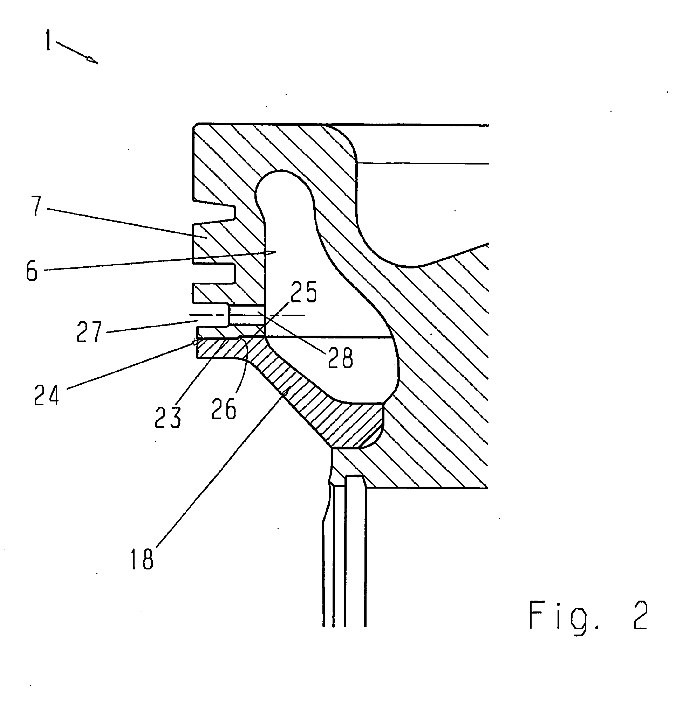

Das vergrößerte Schnittbild gemäß Fig. 2 zeigt, dass die kolbenbolzenseitige Stirnfläche 24 der Ringwand 7 eine stufenförmige Hinterschneidung 25 aufweist, die in ihrer Form einer auf dem Außenrand 23 der Kühlkanalabdeckung 18 angebrachten, ebenfalls stufenförmigen Aussparung 26 entspricht, sodass nach der Endmontage des Kolbens 1 die Hinterschneidung 25 und die Aussparung 26 ineinandergreifen und zur Verhinderung lastbedingter Verformungen des äußeren Bereiches des Kolbenbodens 4 beitragen. Weiterhin ist in Fig. 2 erkennbar, dass zwischen der Nut 27 für den (in der Figur nicht dargestellten) Ölabstreifring und dem Kühlkanal 6 Ölkrücklaufbohrungen 28 angeordnet sind.

Die in Fig. 3 dargestellte Kühlkanalabdeckung 18 besteht aus zwei halbkreisförmigen Abdeckelementen 19 und 20. Sie kann aber auch drei- oder mehrteilig ausgebildet sein. Zu erkennen sind die in den Außenrand 23 eingeformte stufenförmige Aussparung 26 und die Öffnung 16 zum Zulauf und und die Öffnung 16' zum Ablauf von Kühlöl.

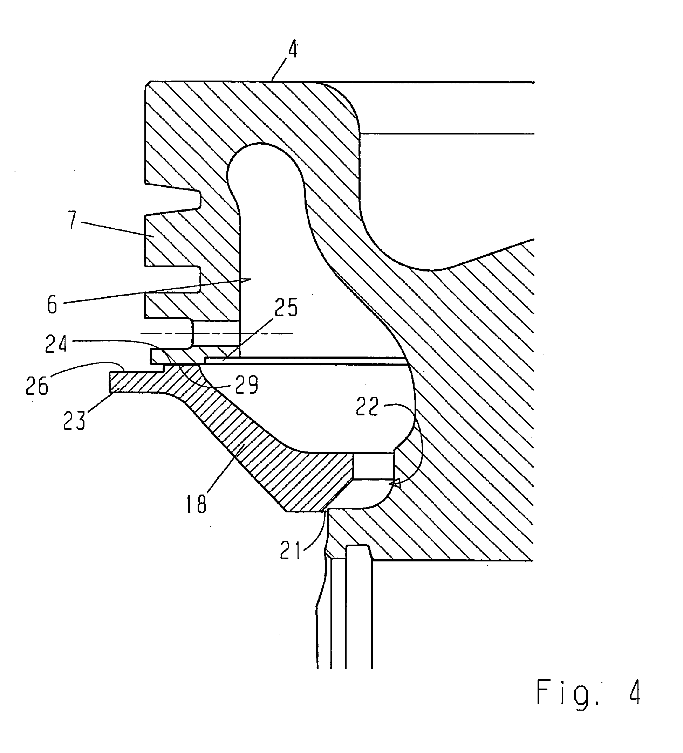

Anhand von Fig. 4 sei die Art der Montage der Kühlkanalabdeckung 18 veranschaulicht. Diese wird zunächst mit ihrem Innenrand 21 an eine Kante der Ausnehmung 22 und mit ihrem Außenrand 23 an die Stirnfläche 24 der Ringwand 7 in Anlage gebracht, wie dies in Fig. 4 dargestellt ist. Anschließend wird der Innenrand 21 axial in Richtung Kolbenboden 4 gedrückt, wobei die Kühlkanalabdeckung 18 vorgespannt wird und radial nach innen geschoben werden kann, sodass sie mit ihrem Innenrand 21 in der Ausnehmung 22 zu liegen kommt. In dieser Position wird die Kühlkanalabdeckung 18 dadurch fixiert, dass die von der Aussparung 26 gebildete Stufe 29 in die Hinterschneidung 25 der Stirnfläche 24 einschnappt. Die Kühlkanalabdeckung 18 ist derart ausgebildet, dass sie nach der Endmontage eine geringe Verformung und damit eine bleibende Vorspannung beibehält.

### Bezugszeichenliste

- 1: Kolben
- 2: Längsachse
- 3, 3': Nabenbohrung
- 4: Kolbenboden
- 5: Brennraummulde
- 6: Kühlkanal
- 7: Ringwand
- 8: Ringrippe
- 9, 9': Nabenabstützung
- 10, 10': Bolzennabe
- 11: Stirnfläche
- 12: Kolbenlängsachse
- 13, 13': Schaftelement
- 14: kolbenbodenseitiger Bereich
- 15: Ausnehmung
- 16, 16': Öffnung
- 17, 17': Schaftanbindung
- 18: Kühlkanalabdeckung
- 19: Abdeckungselement
- 20: Abdeckungselement
- 21: Innenrand der Kühlkanalabdeckung 18
- 22: Ausnehmung
- 23: Außenrand der Kühlkanalabdeckung 18
- 24: Stirnfläche der Ringwand 7
- 25: Hinterschneidung
- 26: Aussparung
- 27: Nut
- 28: Ölrücklaufbohrung
- 29: Stufe

## Patentansprüche

1. Einteiliger Kolben (1) für einen Verbrennungsmotor,
- mit einem Kolbenboden (4),
- mit zwei am Kolbenboden (4) angeformten Nabenabstützungen (9, 9') für je eine Bolzennabe (10, 10'), wobei die Nabenabstützungen (9, 9') und die Stirnflächen (11) der Bolzennaben (10, 10') gegenüber dem radial äußeren Rand des Kolbenbodens (4) in Richtung Kolbenlängsachse (12) zurückgesetzt angeordnet sind,
- mit zwei die Bolzennaben (10, 10') verbindenden Schaftelementen (13, 13'), die über je eine Schaftanbindung (17, 17') mit dem Kolbenboden (4) verbunden sind, wobei von den Schaftanbindungen (17, 17') zwischen den Schaftelementen (13, 13') und dem Kolbenboden (4) konkave Ausnehmungen (15) gebildet werden,
- mit einem im Randbereich des Kolbenbodens (4) angeordneten, ringförmigen Kühlkanal (6), dessen radial äußere Begrenzung von einer am Kolbenboden angeformten Ringwand (7) und dessen radial innere Begrenzung teils von den Nabenabstützungen (9, 9') und teils von den Schaftanbindungen (17, 17') gebildet wird, und
- mit einer als Stützelement ausgebildeten, aus mindestens zwei teilkreisförmigen Abdeckungselementen (19, 20) bestehenden Kühlkanalabdeckung (18), die den Kühlkanal (6) zur Seite der Bolzennaben (10,10') hin verschließt, wobei der Innenrand (21) der Kühlkanalabdeckung (18) in einer teilweise in die Nabenabstützungen (9, 9') und teilweise in die Schaftanbindungen (17,17') eingearbeitete Ausnehmung (22) lagert, **dadurch gekennzeichnet, dass** die Kühlkanalabdeckung (18) als Stützelement ausgebildet ist und der Außenrand (23) der Kühlkanalabdeckung (18) die Ringwand (7) über deren bolzennabenseitige Stirnfläche (24) abstützt.

2. Kolben (1) für einen Verbrennungsmotor nach Anspruch 1, **dadurch gekennzeichnet, dass** die Kühlkanalabdeckung (18) aus zwei halbkreisförmigen Abdeckelementen (19, 20) besteht.

3. Kolben (1) für einen Verbrennungsmotor nach Anspruch 1 oder 2, **dadurch gekennzeichnet, dass** die Kühlkanalabdeckung (18) derart ausgebildet ist, dass sie bei der Montage unter Vorspannung zwischen die Ausnehmung (22) und die Stirnfläche (24) der Ringwand (7) einklemmbar ist, und dass sie nach der Montage eine Verformung und damit eine bleibende Vorspannung beibehält.

4. Kolben (1) für einen Verbrennungsmotor nach Anspruch 3, **dadurch gekennzeichnet, dass** die Stirnfläche (24) der Ringwand (7) eine derart geformte stufenförmige Hinterschneidung (25) und der Außenrand (23) der Kühlkanalabdeckung (18) eine derart geformte stufenförmige Aussparung (26) aufweisen, dass bei der Montage der Kühlkanalabdeckung (18) eine von der Aussparung (26) gebildete Stufe (29) in die Hinterschneidung (25) der Stirnfläche (24) einschnappt.

## Claims

1. Monobloc piston (1) for an internal combustion engine,
- with a piston crown (4),
- with two hub supports (9, 9') formed on the piston crown (4) for two pin hubs (10, 10'), wherein the hub supports (9, 9') and the front surfaces (11) of the pin hubs (10, 10') are arranged set back from the radially external edge of the piston crown (4) in the direction of the piston longitudinal axis (12),
- with two shaft elements (13, 13') connecting the pin hubs (10, 10'), which are connected with the piston crown (4) by two shaft connections (17, 17'), wherein concave recesses (15) are formed by the shaft connections (17, 17') between the shaft elements (13, 13') and the piston crown (4),
- with an annular cooling channel (6) arranged in the edge section of the piston crown (4), of which the radially outer delimitation is formed by an annular wall (7) formed on the piston crown (4), and of which the radially inner delimitation is formed partly by the hub supports (9, 9') and partly by the shaft connections (17, 17'), and
- with a cooling channel cover (18) realised as a support element, consisting of at least two part-circular cover elements (19, 20), which closes off the cooling channel (6) towards the side of the pin hubs (10,10'), wherein the inner edge (21) of the cooling channel cover (18) sits in the recess (22) cut partly into the hub supports (9, 9') and partly into the shaft connections (17,17'), **characterised in that** the cooling channel cover (18) is realised as a support element, and the outer edge (23) of the cooling channel cover (18) supports the annular wall (7) via its front face (24) on the side of the pin hubs.

2. Piston (1) for an internal combustion engine according to Claim 1, **characterised in that** the cooling channel cover (18) consists of two semicircular cover elements (19, 20).

3. Piston (1) for an internal combustion engine according to Claim 1 or 2, **characterised in that** the cooling channel cover (18) is realised in such a way that it can be clamped during assembly under pre-tension between the recess (22) and the front surface (24) of the annular wall (7), and that it retains a deformation and thus a remaining pre-tension after assembly.

4. Piston (1) for an internal combustion engine according to Claim 3, **characterised in that** the front surface (24) of the annular wall (7) has a stepped indentation (25) and the outer edge (23) of the cooling channel cover (18) has a stepped recess (26), which are shaped in such a way that during assembly of the cooling channel cover (18) a step (29) formed by the recess (26) snaps into the indentation (25) of the front surface (24).

## Revendications

1. Un piston monobloc (1) pour moteur à combustion interne, comprenant:
- un fond (4) de piston;
- deux appuis (9, 9') de moyeu moulés dans le fond (4) du piston, chacun prévu pour un moyeu (10, 10') à goupille, les appuis (9,9') et la face de contact (11) des moyeux (10, 10') étant placés en retrait dans l'axe longitudinal (12) du piston par rapport à la circonférence extérieure du fond (4) du piston;
- deux éléments (13, 13') d'axe reliant les moyeux (10, 10') à goupille, chaque élément d'axe étant relié au fond (4) du piston par une attache (17, 17') formant chacune un creux concave (15) entre les éléments (13, 13') et le fond (4) du piston;
- un canal annulaire de refroidissement (6) disposé dans la région du bord du fond (4) du piston, la circonférence externe du canal (6) étant constituée par une paroi annulaire (7) moulée dans le fond du piston, et sa circonférence interne étant constituée en partie par les appuis (9, 9') de moyeu et en partie par les attaches (17, 17') d'axe;
- un couvercle (18) de canal de refroidissement composé d'au moins deux éléments (19, 20) de couvercle semi-circulaires fermant le canal de refroidissement (6) du côté des moyeux (10, 10') à goupille, le bord intérieur (21) du couvercle (18) étant logé dans un creux (22) ménagé pour partie dans les appuis (9, 9') de moyeu et pour partie dans les attaches (17, 17') de moyeu, **caractérisé par le fait que** le couvercle (18) du canal de refroidissement est configuré en tant qu'élément de support, et le bord extérieur (23) du couvercle (18) supportant la paroi annulaire (7) par la surface de contact (24) côté moyeu à goupille de cette dernière.

2. Un piston (1) pour moteur à combustion interne identique à celui de la demande 1, **caractérisé par le fait que** le couvercle (18) du canal de refroidissement est composé de deux éléments (19, 20) semi-circulaires.

3. Un piston (1) pour moteur à combustion interne identique à celui des demandes 1 ou 2, **caractérisé par le fait que** le couvercle (18) est configuré de manière à pouvoir, au montage, s'encastrer précontraint entre le creux (22) et la surface de contact (24) de la paroi annulaire (7) et qu'une fois monté, il reste déformé sous l'effet de la précontrainte.

4. Un piston (1) pour moteur à combustion interne identique à celui de la demande 3, **caractérisé par le fait que** la surface de contact (24) de la paroi annulaire (7) présente une contre-dépouille (25) et que le bord extérieur (23) du couvercle (18) du canal de refroidissement présente une échancrure (26), la contre-dépouille (25) et l'échancrure (26) étant configurées de manière qu'au montage, le couvercle (18) s'encliquète dans un ressaut (29) formé par l'échancrure (26) ménagée dans la contre-dépouille (25) de la surface de contact (24).
